# EUROPEAN PATENT SPECIFICATION

(11) **EP 2 431 126 B1**
(45) Date of publication and mention of the grant of the patent: **08.05.2013**
(21) Application number: 11180946.3
(22) Date of filing: 12.09.2011
(51) Int. Cl.: B23Q 39/04, B23Q 41/02, B23Q 39/02

(54) **Machine tool for chip removal**
Spanabhebende Werkzeugmaschine
Machine-outil pour enlèvement de copeaux

(30) Priority: 16.09.2010 IT VI20100252
(43) Date of publication of application: 21.03.2012
(73) Proprietor: Sistech s.r.l., 36040 Brendola (VI) (IT)
(72) Inventor: Nardon, Pierangelo, 36050 Sovizzo (Vicenza) (IT)
(74) Representative: Bettello, Pietro

(56) References cited:
- EP-A2- 1 570 946
- EP-A2- 1 743 736
- WO-A1-2005/005098
- DE-A1- 10 119 175
- DE-U1- 20 301 126

## Description

The present finding concerns a machine tool for chip removal, according to the preamble of claim 1.

Machine tools for chip removal, defined with the generic and overall term "work centres", are complex operating units, with three or more axes, intended for producing pieces of greatly differing types and substantially consisting of a spindle moved over many axes, of a piece-carrying table and of a tool store.

In known constructive solutions the functionality and therefore the overall productivity of the system is influenced by so-called "passive times", i.e. lasting all the time taken for operations during which chip removal does not take place through the tool on the piece.

In practice, a "passive time" that affects productivity is that resulting from a tool change, i.e. the operation carried out on the spindle when a tool needs to be replaced to carry out subsequent processing.

This drawback has been partially overcome by making the operating unit described in patent document no.VI2002A000231, where the spindle, the tool change mechanism and the tool store are mounted on a single support structure, which moves over three axes "X-Y-Z" so as to be able to work the detail mounted on the piece-carrying table.

With such a constructive solution, the tool change time is reduced to the minimum, thanks to the fact that the spindle and the tool store are arranged alongside one another and the tool change is performed without having to carry out movements of the spindle on the axes (X-Y) (horizontal plane), but just by moving back its work axis (Z) (vertical direction); such a change can occur in any position of the spindle with respect to the axes (X-Y), through a tool change device consisting of a "rotary joint", which has the function of locking the two tools being exchanged through two grippers and exchanging their position, from the spindle to the store and vice-versa, through just a rotary movement of 180°; despite this the productivity of the machine is still low because in any case, during this period, the tool is active, since it is engaged in the tool change operation.

The most significant document of the state of the art is EP1743736, which forms the basis for the preamble of claim 1.

The purpose of the present finding is to make a machine tool that, thanks to a specific combination of movements, is able to further reduce the "tool change time" with respect to the "passive time" encountered in similar known machine tools and, in particular, with respect to the operating unit described in the aforementioned patent document.

Such a purpose is accomplished by making a machine tool for chip removal as defined in claim 1.

The machine is also equipped with a structure, which comprises a double piece-carrying table, where the two pieces to be worked are oriented in three-dimensional space so that every piece is presented to the corresponding tool on the five faces of the cube that defines the aforementioned piece subjected to processing in infinite positions; said structure is able to slide horizontally to position the two pieces at the two spindles ― alternatively of the first station or of the second station, which allows the two pieces to be positioned at two working spindles, whereas the other two spindles are engaged in the tool change.

With such an embodiment the "passive time" consists of just the time necessary to move the two pieces from the two spindles, where they have undergone a first specific processing, to the other two spindles, where they must undergo the subsequent processing, with two different tools and vice-versa, or of the time to move from one of the two work stations to the other.

In practice, therefore, the productivity of the machine according to the finding is substantially improved by the following operating conditions:
- the time taken to move the two pieces from the two spindles of one station to the two spindles of the other station is short, since the four spindles are arranged practically alongside one another;
- when the two pieces are being processed with two spindles, the other two spindles carry out the tool change and position themselves so as to wait for the next operation.

Moreover, again to reduce the "passive time" to the minimum, the finding foresees that the machine is completed with a rotator that, alongside the machine itself, takes care of the automatic loading/unloading steps of the pieces on the piece-carrying trolley.

The finding will be defined more clearly with the description of a possible embodiment thereof, provided just as a non-limiting example, with the help of the attached tables of drawings, where:
- fig. 1 (table I) represents an elevated side view of the operating unit according to the finding;
- fig. 2 (table II) represents a front view, sectioned according to the line II-II of fig.1;
- figs. 3-4 (table III) represent the two work steps on the piece at the two work stations;
- fig. 5 (table IV) represents the loading/unloading steps of the pieces being worked.

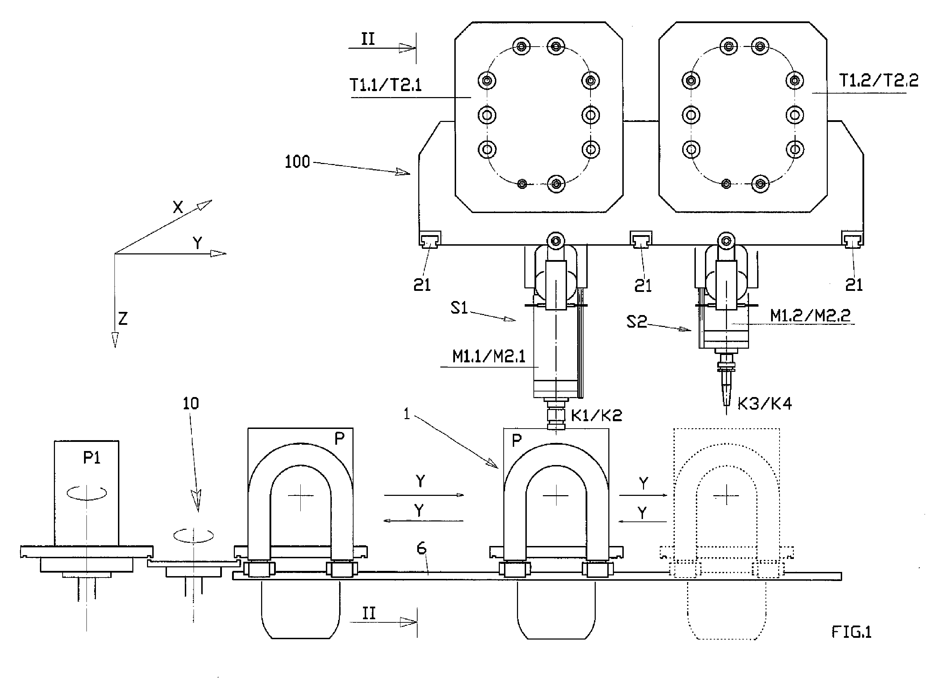

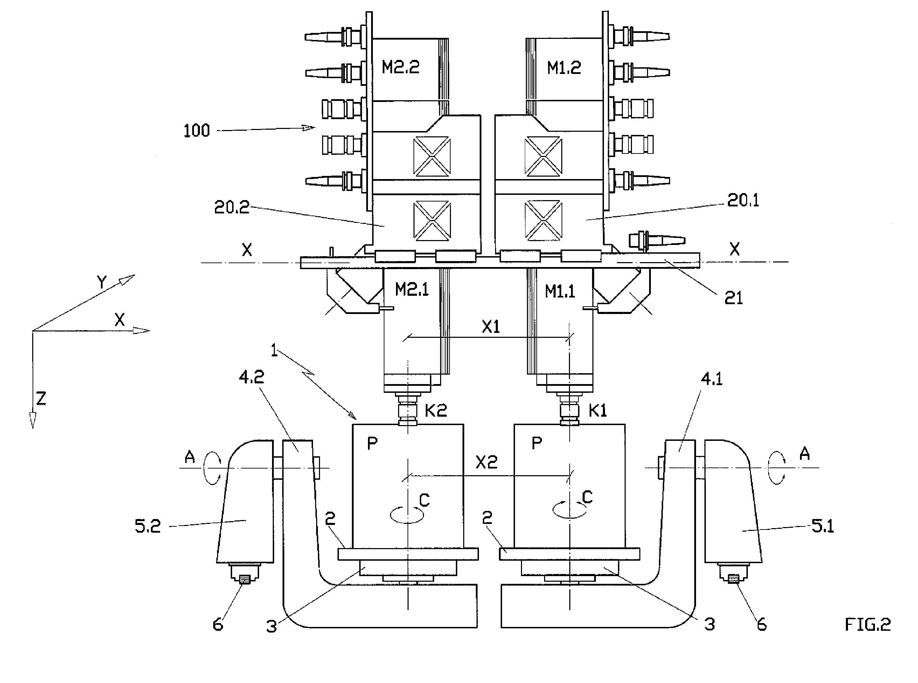

As can be seen in figs. 1-2, the machine according to the finding comprises a work centre, wholly indicated with reference numeral 100, where the four spindles M1.1, M2.1, M1.2 and M2.2 operate, which are equipped with mutually independent movement, in the direction (Z), fed by the corresponding stores T1.1, T2.1,T1.2 and T2.2 and a piece-carrying trolley, wholly indicated with reference numeral 1, where the two pieces to be worked P are positioned. As can be seen in fig.2, the four spindles are mounted in pairs, specifically the pair of spindles M1.1-M2.1 and the pair M1.2-M2.2, on two distinct trucks, wholly indicated with reference numerals 20.1 and 20.2, able to slide in the direction "X", with mutually independent movement, on the guides 21.

In this way it is possible to vary the distance between centres X1 of the pair of spindles M1.1-M2.1 of the first work station S1 and of the spindles M1.2-M2.2 of the second work station S2 (see fig.1), to adjust it with the distance between centres X2 of the two pieces P mounted on the respective rotary tables 3. Again as can be seen in fig.2, the structure 1 is made up of two distinct and independent beams 4.1 and 4.2, equipped with mutually independent movement, each of which has the piece P positioned on it, mounted on the pallet 2, in turn resting on the rotary table 3; said two beams are in turn hinged to the lateral supports 5.1 and 5.2 so that they can swing and said supports are able to slide on the horizontal guides 6, which extend in the direction "Y", to engage in a pallet change station, wholly indicated with reference numeral 10.

Specifically, the constructive solution that foresees the use of two distinct beams 4.1 and 4.2 allows the micrometric adjustment of the centres of rotation "C" of the tables 3, along the axis "Y", to align them with the axes of the two pairs of spindles, respectively with the pair M.1.1-M2.1 of the work station S1 and with the pair M1.2-M2.2 of the work station S2.

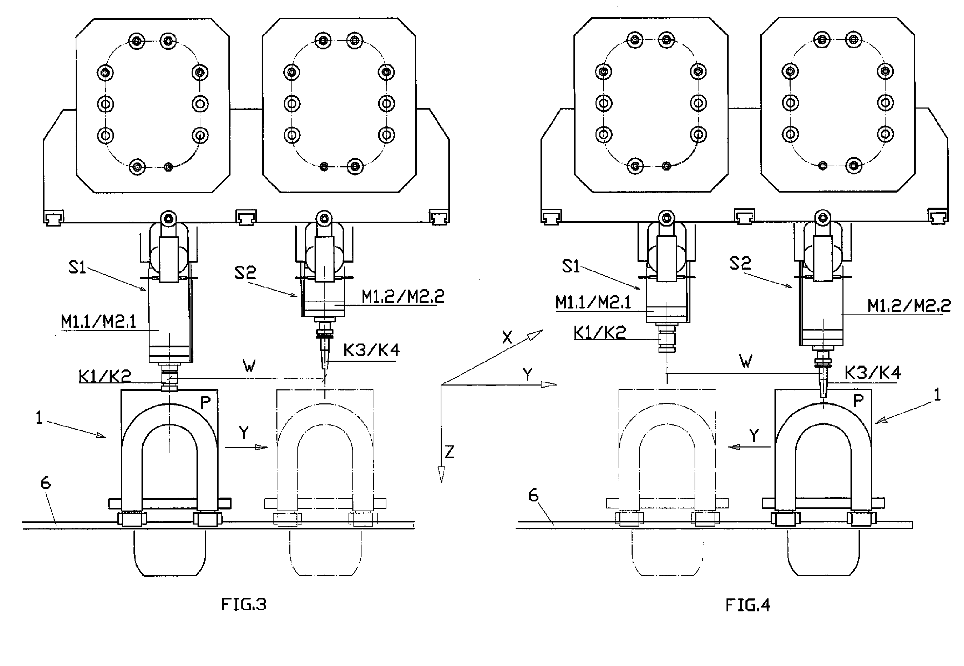

Operatively, as can be seen by observing fig. 1, with the constructive solution according to the finding, since the piece-carrying trolley 1 is able to slide on the guides 6, it is possible to position the two pieces P at either one of the two work stations S1 and S2; this makes it possible to have the two pieces P being processed with the two tools K1 and K2, while, at the same time, the changing operation of the tools K3 and K4 takes place (see fig. 3); once processing has ended, with the movement of the trolley 1 the two pieces P are positioned at the tools K3 and K4, to carry out the subsequent processing, while, at the same time, the changing operation of the tools K1 and K2 takes place and where the tool change operation can occur in any position of the trucks 20.1-20.2, while they are moving or immobile, (see fig. 4).

In practice, the two pieces P are always being processed, apart from the minimal "passive time" necessary to move the trolley 1 in the distance between centres "W" between the two pairs of spindles M1.1-M2.1 and M.1.2-M2.2 applied to the two work stations S1 and S2.

Moreover, as can be seen by observing fig. 2, from the combination of the two rotary movements present in the trolley 1, i.e. the rotation about the axes "C" of the rotary tables 3 and the swinging rotation, along the axis "A" of the two beams 4.1 and 4.2, it is possible to present the tools with five faces of the cube that defines the piece P being processed, with infinite position combinations, in a quick and precise manner.

As can be seen in fig. 1, at the end of the work cycle, the trolley 1 deposits the worked pieces P in the pallet change station 10, where the exchange with the pieces P1 to be worked takes place.

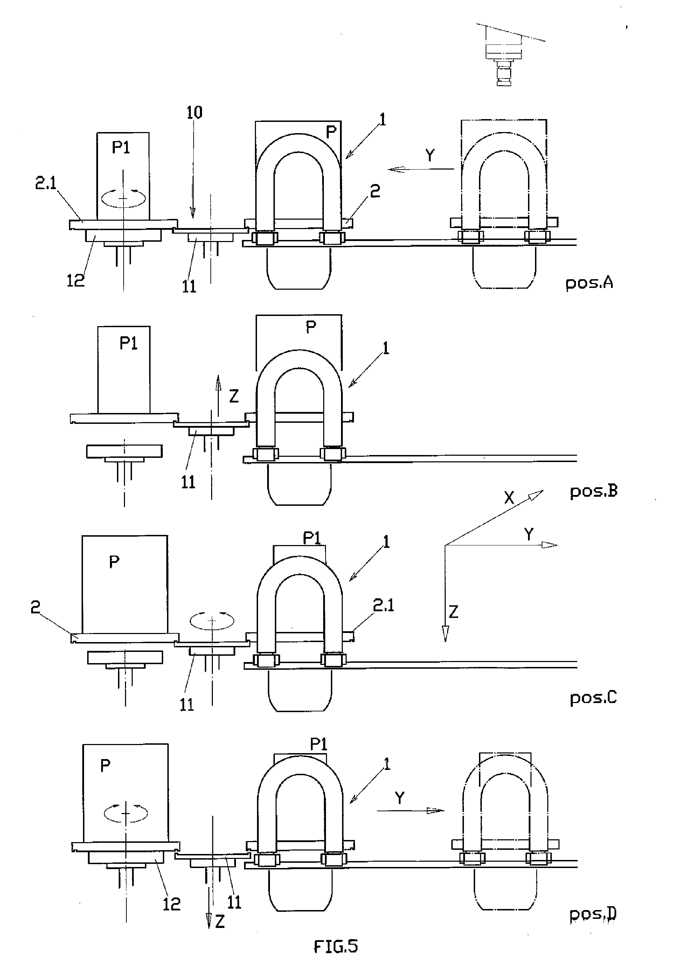

Operatively, as can be seen from fig. 5, the pallet change 10 comprises a load rotator 11, which hooks the pallets 2 and 2.1, where the two worked pieces P and the two pieces P1 to be worked are respectively mounted (pos. A), lifts them (pos. B), rotates them by 180° on the horizontal plane (pos. C) and lowers to position the two new pieces P1 to be worked on the trolley 1 and the two worked pieces P on the loading/unloading table 12.

Advantageously, in order to make it easier to position the piece being loaded and to pick up the worked piece, the loading/unloading table 12 is of the rotary type.

## Claims

1. MACHINE TOOL FOR CHIP REMOVAL, which comprises a work centre (100), made up of a plurality of operating units, comprising a spindle, a piece-carrying table and a tool store the spindle moving on two axes ("X-Z"), of the type where four spindles (M1.1, M2.1, M1.2, M2.2) are fed by the corresponding tool stores (T1.1, T2.1, T1.2, T2.2), with it being foreseen that the pieces (P) to be worked are mounted on a piece-carrying trolley (1) able to slide horizontally in the direction ("Y") of one of the axes, to position the pieces (P), alternatively, at the spindles (M1.1-M2.1) applied on a first work station (S1) and at the spindles (M1.2-M2.2) applied onto a second work station (S2), in order to allow the pieces (P) to be positioned at the working spindles, whereas the other spindles, at the same time, are engaged in the tool-change operation and vice-versa, **characterised in that** the piece-carrying trolley (1) orients the pieces (P) in three-dimensional space, with translation along the direction (Y) and rotation around two axes (A.C.) and consists of two separate and distinct beams equipped with mutually independent movement (4.1, 4.2), each of which has the piece (P) positioned on it, mounted on a pallet (2), in turn resting on the rotary tables (3), each of said two beams (4.1, 4.2) being hinged to the side support (5.1, 5.2) sliding on the guide (6), which allows the micrometric adjustment of the centres of rotation "C" of the tables (3), along one of the axes (Y), to align them with the axes of the two pairs of spindles (M.1.1, M2.1 of the work station (S1) and with the pair of spindles (M1.2, M2.2) of the work station (S2).

2. MACHINE TOOL FOR CHIP REMOVAL, according to claim 1, **characterised in that** thanks to the combination of the two rotary movements present in the trolley (1), i.e. the rotation around the axes (C) of the rotary tables (3) and the swinging rotation along the axis (A) of the separate beams (4.1, 4.2), it is possible to present the five faces of the cube defining the piece (P) being worked to the tools (K), at infinite positions.

3. MACHINE TOOL FOR CHIP REMOVAL, according to claim 1, **characterised in that** the horizontal guides (6) engage in a pallet change station (10), which takes care of the steps of loading/unloading the pieces on the piece-carrying trolley (1).

4. MACHINE TOOL FOR CHIP REMOVAL, according to claim 3, **characterised in that** the pallet change station (10) comprises a load rotator (11), which hooks the pallets (2, 2.1), where the worked pieces (P) and the pieces (P1) to be worked are respectively mounted, lifts them, rotates them by 180° and lowers to position the new pieces (P1) to be worked on the trolley (1) and the worked pieces (P) on the loading/unloading table (12).

5. MACHINE TOOL FOR CHIP REMOVAL, according to claim 4 **characterised in that** the loading/unloading table (12) is of the rotary type.

6. MACHINE TOOL FOR CHIP REMOVAL, according to one or more of the previous claims, **characterised in that** at least four spindles, equipped with mutually independent movement with respect to the direction "Z", are mounted in pairs, to be precise the pair of spindles (M1.1, M2.1) and the pair of spindles (M1.2, M2.2), on two distinct trucks (20.1, 20.2), sliding in one direction (X), with mutually independent movement, on the guides (21), thus making it possible to vary the distance between centres (X1) of the pair of spindles (M1.1, M2.1) of the first work station (S1) and of the spindles (M1.2, M2.2) of the second work station (S2) to adjust it with distance between centres (X2) of the two pieces (P) mounted on the respective rotary tables (3).

7. WORKING PROCESS USING THE MACHINE TOOL FOR CHIP REMOVAL, according to one of the previous claims, **characterised in that** the two pieces (P) are always working apart from the minimum "passive time" necessary for the movement of the trolley (1) in the distance between centres (W) between the two pairs of spindles (M1.1, M2.1) and (M.1.2, M2.2) applied on the two work stations (S1, S2).

8. WORKING PROCESS OF THE MACHINE TOOL FOR CHIP REMOVAL, according to claim 7, **characterised in that** the piece-carrying trolley (1), sliding on the guides (6), positions the two pieces (P) at the two work stations (S1, S2) alternatively, thus allowing the two pieces (P) to be processed with the two tools (K1, K2) whilst, at the same time, the tool change operation (K3, K4) takes place and, once the working is complete, with the movement of the trolley (1), the two pieces (P) are positioned at the tools (K3, K4), to carry out the subsequent working whilst, at the same time, the tool change operation (K1, K2) takes place and where the tool change operation takes place in any position of the trolleys (20.1-20.2), when they are moving or immobile.

## Patentansprüche

1. SPANHABENDE WERKZEUGMASCHINE, die ein Bearbeitungszentrum (100) umfasst, das aus einer Vielzahl von Arbeitseinheiten besteht, die eine Spindel, einen Werkstückauflagetisch und ein Werkzeugmagazin umfassen, wobei sich die Spindel auf zwei Achsen ("X-Z") bewegt, und die von dem Typ sind, bei dem vier Spindeln (M1.1, M2.1, M1.2, M2.2) von den entsprechenden Werkzeugmagazinen (T1.1, T2.1, T1.2, T2.2) versorgt werden, wobei vorgesehen ist, dass die zu bearbeitenden Werkstücke (P) auf einen Werkstückträgerwagen (1) montiert sind, der waagrecht in der Richtung ("Y") von einer der Achsen gleiten kann, um die Werkstücke (P) alternativ bei den Spindeln (M1.1-M2.1), die an einer ersten Arbeitsstation (S1) angebracht sind, und bei den Spindeln (M1.2-M2.2), die an einer zweiten Arbeitsstation (S2) angebracht sind, zu positionieren, um die Positionierung der Werkstücke (P) bei den arbeitenden Spindeln zu ermöglichen, während die anderen Spindeln zur gleichen Zeit mit dem Werkzeugwechselvorgang beschäftigt sind, und umgekehrt, **dadurch gekennzeichnet, dass** der Werkstückträgerwagen (1) die Werkstücke (P) im dreidimensionalen Raum mit einer Verschiebung längs der Richtung (Y) und einer Drehung um die zwei Achsen (A.C.) ausrichtet und aus zwei getrennten und gesonderten Trägern (4.1, 4.2), die sich voneinander unabhängig bewegen können, besteht, von denen jeder das Werkstück (P) darauf angeordnet hat, das auf eine Palette (2) montiert ist, die ihrerseits auf den Rundtischen (3) ruht, wobei jeder der zwei Träger (4.1, 4.2) an den seitlichen Support (5.1, 5.2) angelenkt ist, der auf der Führung (6) gleitet, welche die Feineinstellung der Drehpunkte "C" der Tische (3) längs einer der Achsen (Y) ermöglicht, um sie mit den Achsen der zwei Paare von Spindeln (M1.1, M2.1) der Arbeitsstation (S1) und mit dem Paar von Spindeln (M1.2, M2.2) der Arbeitsstation (S2) auszurichten.

2. SPANHABENDE WERKZEUGMASCHINE nach Anspruch 1, **dadurch gekennzeichnet, dass** es dank der Kombination der zwei Drehbewegungen beim Wagen (1), d.h. der Drehung um die Achsen (C) der Rundtische (3) und der Schwenkdrehung um die Achse (A) der getrennten Träger (4.1, 4.2), möglich ist, die fünf Seitenflächen des Würfels, der das bearbeitete Werkstück (P) definiert, den Werkzeugen (K) in unendlich vielen Positionen darzubieten.

3. SPANHABENDE WERKZEUGMASCHINE nach Anspruch 1, **dadurch gekennzeichnet, dass** die horizontalen Führungen (6) in eine Palettenwechselstation (10) eingreifen, welche die Schritte des Ladens/Entladens der Werkstücke auf den bzw. von dem Werkstückträgerwagen (1) ausführt.

4. SPANHABENDE WERKZEUGMASCHINE nach Anspruch 3, **dadurch gekennzeichnet, dass** die Palettenwechselstation (10) einen Palettenwender (11) umfasst, der die Paletten (2, 2.1), auf die jeweils die bearbeiteten Werkstücke (P) und die zu bearbeitenden Werkstücke (P1) montiert sind, ergreift, anhebt, um 180° dreht und absenkt, um die neuen zu bearbeitenden Werkstücke (P1) auf dem Wagen (1) und die bearbeiteten Werkstücke (P) auf dem Lade-/Entladetisch (12) anzuordnen.

5. SPANHABENDE WERKZEUGMASCHINE nach Anspruch 4, **dadurch gekennzeichnet, dass** der Lade-/Entladetisch (12) ein Rundtisch ist.

6. SPANHABENDE WERKZEUGMASCHINE nach einem oder mehreren der vorhergehenden Ansprüche, **dadurch gekennzeichnet, dass** mindestens vier Spindeln, die sich unabhängig voneinander in Bezug auf die Richtung "Z" bewegen können, paarweise, genauer gesagt das Spindelpaar (M1.1, M2.1) und das Spindelpaar (M1.2, M2.2), auf zwei gesonderte Wagen (20.1, 20.2) montiert sind, die mit einer voneinander unabhängigen Bewegung auf den Führungen (21) in einer Richtung (X) gleiten, wodurch es möglich ist, den Abstand zwischen den Mitten (X1) des Spindelpaares (M1.1, M2.1) der ersten Arbeitsstation (S1) und der Spindeln (M1.2, M2.2) der zweiten Arbeitsstation (S2) zu verändern, um ihn an den Abstand zwischen den Mitten (X2) der zwei Werkstücke (P) anzupassen, die auf die zugehörigen Rundtische (3) montiert sind.

7. ARBEITSVERFAHREN UNTER VERWENDUNG DER SPANHABENDEN WERKZEUGMASCHINE nach einem der vorhergehenden Ansprüche, **dadurch gekennzeichnet, dass** die zwei Werkstücke (P) abgesehen von der minimalen "Nebenzeit", welche die Bewegung des Wagens (1) auf dem Weg zwischen Mitten (W) zwischen den zwei an den zwei Arbeitsstationen (S1, S2) angebrachten Spindelpaaren (M1.1, M2.1) und (M1.2, M2.2) erfordert, stets in Arbeit sind.

8. ARBEITSVERFAHREN DER SPANHABENDEN WERKZEUGMASCHINE nach Anspruch 7, **dadurch gekennzeichnet, dass** der auf den Führungen (6) gleitende Werkstückträgerwagen (1) die zwei Werkstücke (P) alternativ bei den zwei Arbeitsstationen (S1, S2) positioniert, so dass die zwei Werkstücke (P) mit den zwei Werkzeugen (K1, K2) bearbeitet werden können, während zur gleichen Zeit der Werkzeugwechselvorgang (K3, K4) erfolgt, und wobei die zwei Werkstücke (P) nach Abschluss der Bearbeitung durch eine Bewegung des Wagens (1) bei den Werkzeugen (K3, K4) positioniert werden, um die anschließende Bearbeitung auszuführen, während zur gleichen Zeit der Werkzeugwechselvorgang (K1, K2) erfolgt, und wobei der Werkzeugwechselvorgang in jeder Position der Wagen (20.1-20.2) erfolgt, wenn sie sich bewegen oder bewegungslos sind.

## Revendications

1. Machine-outil à copeaux, qui comprend un centre d'usinage (100), constitué d'une pluralité d'unités fonctionnelles, comprenant une broche, un plateau porte-pièce et un magasin d'outils, la broche se déplaçant sur deux axes ("X-Z"), du type où quatre broches (M1.1, M2.1, M1.2, M2.2) sont alimentées par les magasins d'outils correspondants (T1.1, T2.1, T1.2, T2.2), étant prévu avec celle-ci que les pièces (P) à usiner soient montées sur un chariot porte-pièce (1) adapté pour coulisser horizontalement dans la direction ("Y") d'un des axes, pour positionner les pièces (P), alternativement, au niveau des broches (M1.1, M2.1) appliquées sur une première station d'usinage (S1) et au niveau des broches (M1.2, M2.2) appliquées sur une deuxième station d'usinage (S2), de manière à permettre de positionner les pièces (P) au niveau des broches d'usinage, alors que les autres broches, au même moment, sont engagées dans l'opération de changement d'outil et inversement, **caractérisée en ce que** le chariot porte-pièce (1) oriente les pièces (P) dans un espace tridimensionnel, avec translation suivant la direction (Y) et rotation autour de deux axes (A.C.) et se compose de deux poutres séparées et distinctes équipées avec un mouvement mutuellement indépendant (4.1, 4.2), chacune desquelles a la pièce (P) positionnée dessus, montée sur une palette (2), reposant à son tour sur des plateaux rotatifs (3), chacune desdites deux poutres (4.1, 4.2) étant articulée avec le support latéral (5.1, 5.2) coulissant sur le guide (6), qui permet le réglage micrométrique des centres de rotation "C" des plateaux (3), suivant un des axes (Y), pour les aligner avec les axes des deux paires de broches (M1.1, M2.1) de la station d'usinage (S1) et avec la paire de broches (M1.2, M2.2) de la station d'usinage (S2).

2. Machine-outil à copeaux selon la revendication 1, **caractérisée en ce que**, grâce à la combinaison des deux mouvements de rotation présents dans le chariot (1), c'est-à-dire la rotation autour des axes (C) des plateaux rotatifs (3) et la rotation de pivotement suivant l'axe (A) des poutres séparées (4,1, 4.2), il est possible de présenter les cinq faces du cube définissant la pièce (P) qui est usinée aux outils (K), dans des positions infinies.

3. Machine-outil à copeaux selon la revendication 1, **caractérisée en ce que** les guides horizontaux (6) s'engagent dans une station de changement de palette (10), qui se charge des étapes de chargement/déchargement des pièces sur le chariot porte-pièce (1).

4. Machine-outil à copeaux selon la revendication 3, **caractérisée en ce que** la station de changement de palette (10) comprend un dispositif de rotation de charge (11), qui accroche les palettes (2, 2.1), où sont montées respectivement les pièces usinées (P) et les pièces (P1) à usiner, les soulève, les tourne de 180° et les abaisse pour positionner les nouvelles pièces (P1) à usiner sur le chariot (1) et les pièces usinées (P) sur le plateau de chargement/déchargement (12).

5. Machine-outil à copeaux selon la revendication 4, **caractérisée en ce que** le plateau de chargement/déchargement (12) est du type rotatif.

6. Machine-outil à copeaux selon une ou plusieurs des revendications précédentes, **caractérisée en ce qu'**au moins quatre broches, équipées avec mouvement mutuellement indépendant par rapport à la direction "Z", sont montées par paires, pour être précis la paire de broches (M1.1, M2.1) et la paire de broches (M1.2, M2.2), sur deux chariots distincts (20.1, 20.2), coulissant dans une direction (X), avec mouvement mutuellement indépendant, sur les guides (21), en permettant ainsi de faire varier la distance entre les centres (X1) de la paire de broches (M1.1, M2.1) de la première station d'usinage (S1) et des broches (M1.2, M2.2) de la deuxième station d'usinage (S2) pour l'ajuster avec la distance entre les centres (X2) des deux pièces (P) montées sur les plateaux rotatifs respectifs (3).

7. Procédé d'usinage utilisant la Machine-outil à copeaux selon une des revendications précédentes, **caractérisée en ce que** les deux pièces (P) sont toujours en travail en-dehors du "temps passif" minimum nécessaire pour le mouvement du chariot (1) dans la distance entre centres (W) entre les deux paires de broches (M1.1, M2.1) et (M1.2, M2.2) appliquées sur les deux stations d'usinage (S1, S2).

8. Procédé d'usinage de la Machine-outil à copeaux selon la revendication 7, **caractérisée en ce que** le chariot porte-pièce (1), coulissant sur les guides (6), positionne alternativement les deux pièces (P) au niveau des deux stations d'usinage (S1, S2), en permettant ainsi aux deux pièces (P) d'être traitées avec les deux outils (K1, K2) alors que, au même moment, l'opération de changement d'outil (K3, K4) est effectuée et, une fois que l'usinage est terminé, avec le mouvement du chariot (1), les deux pièces (P) sont positionnées au niveau des outils (K3, K4), pour exécuter l'usinage suivant alors que, au même moment, l'opération de changement d'outil (K1, K2) est effectuée et dans lequel l'opération de changement d'outil est effectuée dans n'importe quelle position des chariots (20.1-20.2), quand ils sont en mouvement ou immobiles.
